# EUROPEAN PATENT APPLICATION

(11) **EP 1 093 721 A1**
(43) Date of publication of application: **25.04.2001**
(21) Application number: 00309176.6
(22) Date of filing: 18.10.2000
(51) Int. Cl.: A01N 47/46, A01N 25/18, A01N 25/34

(54) **Controlled-release animal-repellent article**

(30) Priority: 20.10.1999 JP 29832599
(71) Applicant: DAI-ICHI KOGYO SEIYAKU CO., LTD., Shimogyo-ku Kyoto 600-8873 (JP)
(72) Inventor: Kataoka, Hironori, Ikoma-gun, Nara 636-0801 (JP); Hiratsuna, Satoshi, Kyoto-shi, Kyoto 604-8411 (JP)
(74) Representative: West, Alan Harry

(57) **Abstract**

The invention provides an article permitting controlled release of an animal-repellent substance. The article comprises a volatilization control container enclosing a molded body of a base resin incorporating allyl isothiocyanate. The container permits the volatilization rate of allyl isothiocyanate to be controlled and/or adjusted. In one embodiment, the container incorporates one or more openings which expose to the air 0.01 to 50% of the surface of the molded body. In another embodiment, the container is made of a thermoplastic film whose permeability to allyl isothiocyanate is 0.05 to 10 mg/cm² · day.

## Description

The present invention relates to a gel-like resin molded object contained in a volatilization control container and, more particularly, to a gel-like resin molded object contained in a volatilization control container, containing allyl isothiocyanate as an active ingredient, which exerts an effect in repellence of noxious organisms for a long period of time.

Allyl isothiocyanate has been known as a principal ingredient of Japanese horseradish and various applications have been suggested utilizing its stimulant action. For example, it has been suggested to utilize it as an active ingredient of antimicrobial agents, antifungal agents, preservatives, and repellents to noxious organisms. However, allyl isothiocyanate can not be used as it is because of its comparatively high volatility. Accordingly, it is necessary to control the volatilization rate of allyl isothiocyanate on use and to set the volatilization duration period of time of allyl isothiocyanate according to the purposes.

In light of these points, a resin molded object is disclosed in Japanese Patent Publication No. Hei 9-151317 (A). This molded object can contain a large amount of allyl isothiocyanate, so that the durability can be expected to some degree.

However, since this molded object is a rigid cured article, allyl isothiocyanate contained in the interior of the molded object can not transfer to the surface after allyl isothiocyanate in the vicinity of the surface was volatilized with a lapse of time. Therefore, the volatilization amount of allyl isothiocyanate is lowered within about one month at most and the durability is not enough to use as a repellent. In addition, the shape of the resulting molded object is not easy to deform, thus causing a problem about handling on manufacturing of the product.

To solve the problem described above, it is suggested to gel allyl isothiocyanate using a curable resin. The gelation makes it possible to transfer the active ingredient to the surface of the molded object with a lapse of time and to improve the handling.

However, since the gelled drug described above contains a comparatively large amount of a volatile drug, the volatilization rate of the drug is too large sometimes. Accordingly, it becomes necessary to control the volatilization rate of allyl isothiocyanate by some method according to the purposes.

The present invention is made to solve the problems described above and an object of the present invention is to provide a gel-like resin molded object contained in a container provided with a function of controlling the volatilization rate of allyl isothiocyanate.

The gel-like resin molded object contained in a volatilization control container according to the present invention is a gel-like resin molded object contained in a container, a gelled drug containing allyl isothiocyanate and a resin base being contained in a container for controlling a volatilization rate of said allyl isothiocyanate, characterized in that: the container comprises an opening portion and the opening portion occupies a contact area between the gelled drug and an air in the proportion of not less than 0.01% and not more than 50%.

By providing the opening portion which occupies a contact area between the gelled drug and an air in the proportion of not less than 0.01% and not more than 50%, it is made possible to control the volatilization rate of allyl isothiocyanate and to set the volatilization duration period of time according to the purposes.

The gel-like resin molded object contained in a volatilization control container according to the present invention is a gel-like resin molded object contained in a container, a gelled drug containing allyl isothiocyanate and a resin base being contained in a container for controlling a volatilization rate of said allyl isothiocyanate, characterized in that: said container comprises a thermoplastic resin film through which said allyl isothiocyanate can permeate and the permeability of said thermoplastic resin film to said allyl isothiocyanate is not less than 0.05 mg/cm² · day and not more than 10 mg/cm² · day.

By using, as the thermoplastic resin film of the container, a film whose permeability to said allyl isothiocyanate is not less than 0.05 mg/cm² · day and not more than 10 mg/cm² · day, it is made possible to set the volatilization period of time according to the purposes by controlling the volatilization rate of allyl isothiocyanate.

Allyl isothiocyanate contained, as a volatile drug, in the gel-like resin molded object contained in a volatilization control container according to the present invention has been known as a stimulant ingredient of Japanese horseradish. In the present invention, any of natural product and chemically synthesized products can be used. The content of allyl isothiocyanate is within a range of more than 20% by weight and not more than 85% by weight based on the total weight of the gelled drug. When the content is not more than 20% by weight, the resulting gelled drug becomes hard and allyl isothiocyanate does not transfer from the interior to the surface, thereby shortening the volatilization duration period of time of allyl isothiocyanate, which is not preferable. On the other hand, when the content of allyl isothiocyanate is more than 85% by weight, it becomes difficult for the resulting gelled drug to maintain the gel-like form, resulting in poor handling, which is not preferable.

In the molded object of the present invention, any resin base capable of serving as a gelling agent can be used as far as it can swell or dissolve in allyl isothiocyanate at normal temperature. Specific examples thereof include polyurethane resin, polyacrylamide, polystyrene, polyamide, polyacrylate, and copolymers of two or more monomers thereof. Among these resin bases, a polyurethane resin is preferable in view of the solubility and sustained release of allyl isothiocyanate as well as ease of manufacturing.

In the present invention, when using the polyurethane resin as the gel base, examples of the polyisocyanate as one of its raw materials include phenylene diisocyanate, tolylene diisocyanate, hexamethylene diisocyanate, diphenylmethane diisocyanate, naphthalene diisocyanate, xylylene diisocyanate, polymeric diphenylmethane diisocyanate, isophorone diisocyanate, and triphenylmethane diisocyanate, and further include isocyanurate and buret modifiers of these polyisocyanates, and diisocyanate prepolymers as adducts with polyols such as tri methylol propane and hexanetriol. These polyisocyanates can be used alone or in combination. Among these polyisocyanates, hexamethylene diisocyanate and isophorone diisocyanate are preferably used because they do not cause yellowing as a result of the reaction with light and do not lower the commercial value.

Similarly, examples of the polyol as one of gelling agents which are raw materials of the polyurethane resin include aliphatic polyols such as trimethylolpropane, hexanetriol, ethylene glycol, propylene glycol, and hexanediol; aromatic polyols such as xylylene glycol; polyhydric phenols such as hydroquinone and catechol; condensates of these polyhydric alcohols and alkylene oxide; and polyol prepolymers such as polyester polyol and polyether polyol. These polyols are used alone or in combination. There can also be used, as the polyol, polyether polyols such as castor oil, polyoxyalkylene polyol, and polytetramethylene ether glycol; and polyester polyols such as condensed polyester polyol, lactone polyester diol and polycarbonate diol. These are used alone or in combination. Among these polyols, castor oil is preferably used in view of the reactivity.

When using polyurethane as the gel base, it depends on the kinds of polyisocyanates and polyols as raw materials as well as an incorporation ratio of three ingredients, i.e. allyl isothiocyanate, polyisocyanate and polol whether or not the resulting drug is in the gel-like form. Table 1 shows the results obtained by testing whether or not a good gel-like form is obtained by changing the incorporation ratio of the polyisocyanate (isocyanurate type hexamethylene diisocyanate) and the polyol (glyceryl triricinoleate) in case where the content of allyl isothiocyanate is controlled to 40% by weight based on the total weight of the gelled drug. Similarly, the test results in case where the content of allyl isothiocyanate is controlled to 60% by weight or 80% by weight based on the total weigh of the gelled drug are shown in Table 2 and Table 3, respectively.

**Table 1**

| Allyl isothiocyanate | 40% by weight | | | | | | | | |
|---|---|---|---|---|---|---|---|---|---|
| Polyisocyanate % by wt, wt ratio to polyol* | 53.91 (90) | 47.92 (80) | 41.93 (70) | 35.94 (60) | 29.95 (50) | 23.96 (40) | 17.97 (30) | 11.98 (20) | 5.99 (10) |
| Polyol, % by wt ** wt ratio to isocyanate | 5.99 (10) | 11.98 (20) | 17.97 (30) | 23.96 (40) | 29.95 (50) | 35.94 (60) | 41.93 (70) | 47.92 (80) | 53.91 (90) |
| Dibutyltin dilaurate | 0.1 | 0.1 | 0.1 | 0.1 | 0.1 | 0.1 | 0.1 | 0.1 | 0.1 |
| Solidified state | ○ | ○ | ○ | ○ | ○ | ○ | ○ | ○ | X |
| State after one day | good | good | good | good | good | good | good | good | - |
| Rubber hardness | 5-8 | 19-21 | 55-58 | 65-67 | 73-75 | 72-74 | 50-54 | 26-27 | - |

| | | | | | | | | | |
|---|---|---|---|---|---|---|---|---|---|
| *: Duranate THA-100 (isocyanurate type hexamethylene diisocyanate, manufactured by Asahi Chemical Industries Co., Ltd.) | | | | | | | | | |
| **: Castor oil (glyceryl triricinoleate) | | | | | | | | | |
| Solidified state: ○: solidified into gel-like form within 24 hours X: not solidified State after one day: Good: no change Bleed: allyl isothiocyanate solution oozed out Rubber hardness: measured value using Askar rubber hardness tester, Type C | | | | | | | | | |

**Table 2**

| Allyl isothiocyanate | 60% by weight | | | | | | | | |
|---|---|---|---|---|---|---|---|---|---|
| Polyisocyanate %by wt wt ratio to polyol * | 35.91 (90) | 31.92 (80) | 27.93 (70) | 23.94 (60) | 19.95 (50) | 15.96 (40) | 11.97 (30) | 7.98 (20) | 3.99 (10) |
| Polyol, % by wt ** wt ratio to isocyanate | 3.99 (10) | 7.98 (20) | 11.97 (30) | 15.96 (40) | 19.95 (50) | 23.94 (60) | 27.93 (70) | 31.92 (80) | 35.91 (90) |
| Dibutyltin dilaurate | 0.1 | 0.1 | 0.1 | 0.1 | 0.1 | 0.1 | 0.1 | 0.1 | 0.1 |
| Solidified state | ○ | ○ | ○ | ○ | ○ | ○ | ○ | ○ | X |
| State after one day | bleed | bleed | good | good | good | good | good | good | - |
| Rubber hardness | - | - | 48-49 | 53-55 | 58-61 | 64-67 | 45-48 | 22-25 | - |

| | | | | | | | | | |
|---|---|---|---|---|---|---|---|---|---|
| *: Duranate THA-100 (isocyanurate type hexamethylene diisocyanate, manufactured by Asahi Chemical Industries Co., Ltd.) | | | | | | | | | |
| **: Castor oil (glyceryl triricinoleate) | | | | | | | | | |
| Solidified state: ○: solidified into gel-like form within 24 hours X: not solidified State after one day: Good: no change Bleed: allyl isothiocyanate solution oozed out Rubber hardness: measured value using Askar rubber hardness tester, Type C | | | | | | | | | |

**Table 3**

| Allyl isothiocyanate | 80% by weight | | | | | | | | |
|---|---|---|---|---|---|---|---|---|---|
| Polyisocyanate %by wt wt ratio to polyol * | 17.91 (90) | 15.92 (80) | 13.93 (70) | 11.94 (60) | 9.95 (50) | 7.96 (40) | 5.97 (30) | 3.98 (20) | 1.99 (10) |
| Polyol, % by wt ** wt ratio to isocyanate | 1.99 (10) | 3.98 (20) | 5.97 (30) | 7.96 (40) | 9.95 (50) | 11.94 (60) | 13.93 (70) | 15.92 (80) | 17.91 (90) |
| Dibutyltin dilaurate | 0.1 | 0.1 | 0.1 | 0.1 | 0.1 | 0.1 | 0.1 | 0.1 | 0.1 |
| Solidified state | ○ | ○ | ○ | ○ | ○ | ○ | ○ | X | X |
| State after one day | bleed | bleed | bleed | good | good | good | good | - | - |
| Rubber hardness | - | - | - | 15-17 | 16-18 | 7-8 | 0.1-1 | - | - |

| | | | | | | | | | |
|---|---|---|---|---|---|---|---|---|---|
| *: Duranate THA-100 (isocyanurate type hexamethylene diisocyanate, manufactured by Asahi Chemical Industries Co., Ltd.) | | | | | | | | | |
| **: Castor oil (glyceryl triricinoleate) | | | | | | | | | |
| Solidified state: ○: solidified into gel-like form within 24 hours X: not solidified State after one day: Good: no change Bleed: allyl isothiocyanate solution oozed out Rubber hardness: measured value using Askar rubber hardness tester, Type C | | | | | | | | | |

As is apparent from the results of Tables 1 to 3, gelling occurs regardless of the ratio of the polyisocyanate to the polyol in case where the content of allyl isothiocyanate is low, whereas, gelling occurs only in case where the ratio of the polyisocyanate to the polyol is close to 1:1 with the increase of the content of allyl isothiocyanate.

The gel-like resin molded object contained in a volatilization control container according to the present invention is provided with a container having an opening portion for controlling a volatilization rate of allyl isothiocyanate, and the opening portion preferably occupies a contact area between said gelled drug and an air in the proportion of 0.01 to 50%, more preferably 0.05 to 30%, and most preferably 0.1 to 20%, as described above. When the proportion of the opening portion is smaller than the above range, the volatilization duration period of time of allyl isothiocyanate is lengthened but the amount of the volatile gas is lowered, thereby making it impossible to obtain the expected effect, which is not preferable. On the other hand, when the proportion of the opening portion is larger than the above range, the volatilization duration period of time of allyl isothiocyanate is shortened, thereby making it impossible to use depending on the purposes occasionally, which is not preferable.

In the gel-like resin molded object contained in a volatilization control container according to another embodiment of the present invention, the container is made of a thermoplastic resin film through which allyl isothiocyanate can permeate. The permeability of the thermoplastic film to allyl isothiocyanate is preferably within a range from 0.05 to 10 mg/cm² · day, more preferably from 0.05 to 5 mg/cm² · day, and most preferably from 0.1 to 3 mg/cm² · day. When the permeability is smaller than the above range, the volatilization duration period of time of allyl isothiocyanate is lengthened but the amount of the volatile gas is lowered, thereby making it impossible to obtain the expected effect, which is not preferable. On the other hand, when the permeability is larger than the above range, the volatilization duration period of time of allyl isothiocyanate is shortened, thereby making it impossible to use depending on the purposes occasionally, which is not preferable.

Examples of the thermoplastic resin film, which can be used in the present invention, include polyethylene, polypropylene, ethylene-vinyl acetate, polyethylene terephthalate, polyvinyl chloride, nylon and polyacetal films. The thickness of these films is appropriately selected according to the permeability to allyl isothiocyanate. In the present invention, there can also be used films obtained by laminating the films and other packaging materials such as nonwoven fabric. By using in combination with other packaging materials, it is made possible to reinforce the above film and to print on the film, thus making it possible to improve the appearance of the product.

In the present invention, when using a polyethylene film as the thermoplastic resin film, the thickness is preferably within a range from 40 to 500 µm, and more preferably from 100 to 300 µm. When using a polypropylene film as the thermoplastic resin film, the thickness is preferably within a range from 15 to 200 µm, and more preferably from 30 to 100 µm.

In the present invention, the surface of the container can be further provided with an aluminum foil laminated on as gas-permeable packaging material. Formation of such an aluminum foil makes it possible to suppress the volatilization of the volatile drug before use of a volatile gel-like packaging drug.

The gelled drug in the present invention preferably has a rubber strength within a range from 0.1 to 100, more preferably from 5 to 85, concretely. As used herein, the term "rubber strength" refers to a value measured by using an Askar rubber hardness tester, Type C. When the rubber strength is smaller than the above range, the molded object composition is not converted into a gel-like form, resulting in poor handling, which is not preferable. On the other hand, when the rubber strength is larger than the above range, the molded object composition become hard so that allyl isothiocyanate does not transfer from the interior of the molded object to the surface and the volatility of allyl isothiocyanate is lowered, which is not preferable.

The gel-like resin molded object contained in a volatilization control container can be applied even if the gelled drug is in the form of bulk, sheet, film, particle, powder or coating. By molding into various forms, it is made possible to obtain a gel-like resin molded object contained in a volatilization control container, which is in the form suited for various purposes.

The gel-like resin molded object contained in a volatilization control container can be used as a repellent for noxious organisms because allyl isothiocyanate is used as a volatile drug. Specific examples of the noxious organisms include cockroaches, weevils, termites, rats, moles, dogs, cats deer crow, bear and pigeon.

In the gel-like resin molded object contained in a volatilization control container according to the present invention, a gelled drug containing allyl isothiocyanate as a volatile ingredient is contained in a container having an opening portion which occupies a contact area between the gelled drug and an air in the proportion of 0.01% to 50%. Therefore, it is made possible to control the volatilization rate according to the purposes and to set the volatilization duration period of time according to the purposes.

In the gel-like resin molded object contained in a volatilization control container according to the present invention, a gelled drug containing allyl isothiocyanate is contained in a container comprising a thermoplastic resin film whose permeability to said allyl isothiocyanate is 0.05 to 10 mg/cm² · day. Therefore, it is made possible to control the volatilization rate according to the purposes and to set the volatilization duration period of time according to the purposes.
Fig. 1 is a graph showing the results of a relation between the opening proportion and the volatilization rate obtained by the measurement of a weight loss (% by weight).
Fig. 2 is a graph showing the results of a relation between the kinds and thickness of a thermoplastic resin film and the volatilization rate obtained by the measurement of a weight loss (% by weight).

The present invention will now be described by way of examples.

### (Examples 1 to 5 and Comparative Example 1)

In accordance with the formulation shown in Table 4, ingredients were mixed and dissolved in the order from the upper column of the same table. To the mixture, dibutyltin dilaurate was added and mixed to prepare a drug mixture (content of allyl isothiocyanate is 40% by weight). A container made of styrol (a cylindrical container having a diameter of 36 mm and a height of 35 mm, contact area with an air: 1017 mm²) was filled with 20 g of the drug mixture, and then left to stand. After three hours have passed since the filling, the drug mixture was converted into a gelled drug with no fluidity.

**Table 4**

| | Amount(%by weight) |
|---|---|
| Castor oil (glyceryl triricinoleate) | 29.975 |
| Polyisocyanate* | 29.975 |
| Allyl isothiocyanate | 40.0 |
| Dibutyltin dilaurate (added in the form of a 10% Ethyl Acetate solution) | 0.1 |

| | |
|---|---|
| * Duranate THA-100 (isocyanurate type hexamethylene diisocyanate, manufactured by Asahi Chemical Industries Co., Ltd.) | |

This styrol container was provided with an opening portion which occupies a contact area between the gelled drug and an air in the proportion of 50%, 20%, 5%, 1% or 0.1% (opening proportion) to obtain gel-like resin molded objects contained in volatilization control containers of Examples 1 to 5, respectively. For comparison, the sryrol container was provided with an opening portion which occupies the same area as the contact area between the gelled drug and an air (opening proportion: 100%) to obtain gel-like resin molded object contained in a volatilization control container of Comparative Example 1.

### (Examples 6 to 11 and Comparative Example 2)

A drug mixture was prepared in accordance with the same formulation (Table 4) as in Examples 1 to 5. This drug mixture (20 g) was poured into an aluminum mold of 10 cm × 5 cm in size and then left to stand. After three hours have passed since leaving to stand, a gel-like sheet having a thickness of 0.4 cm with no fluidity was obtained. This sheet was cut into pieces of 4 cm × 4 cm in size, put in a thermoplastic resin bag of 6 cm × 6 cm in size and then sealed airtight. As the thermoplastic resin bag, polyethylene bags of 40 µm and 100 µm in thickness (Examples 1 and 2), polypropylene bags of 40 µm and 100 µm in thickness (Examples 3 and 4), a PET (polyethylene terephthalate) bag of 15 µm in thickness (Example 5), and a nylon bag of 15 µm in thickness (Example 6) were used, respectively. In Comparative Example 2, a gel-like sheet was not put in the thermoplastic resin bag.

### (Volatilization rate test)

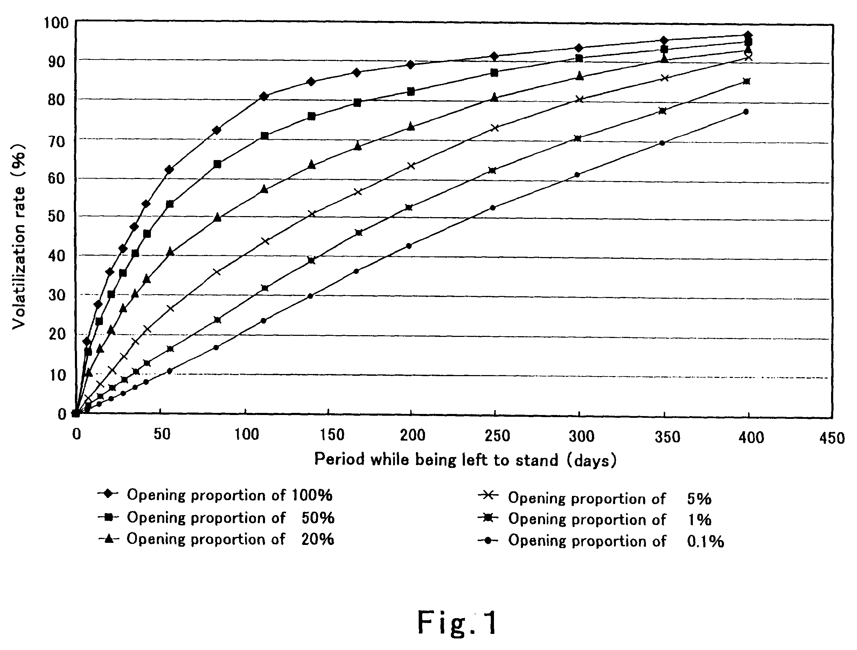

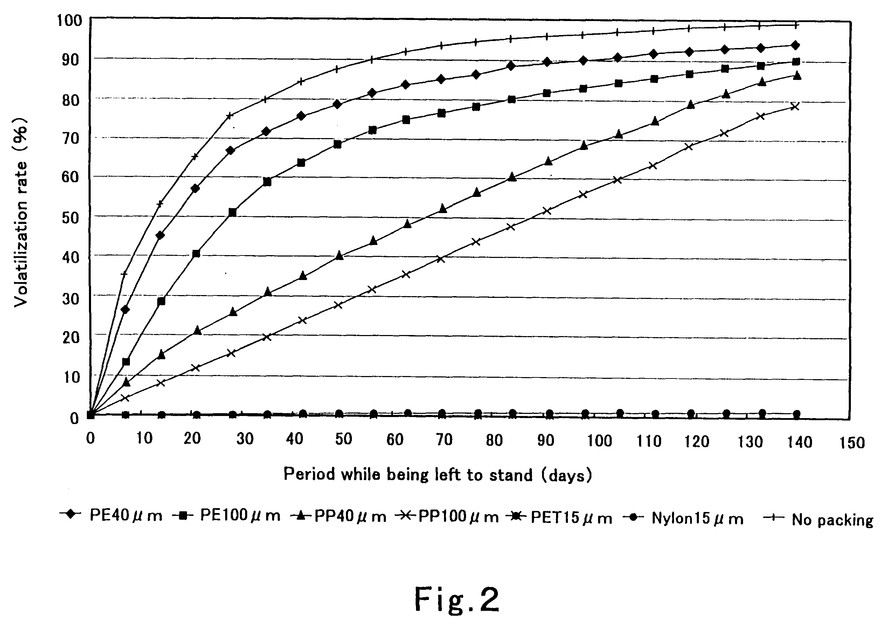

With respect to the gel-like resin molded objects in the container of Examples 1 to 5 and Comparative Example 1 as well as Examples 6 to 11 and Comparative Example 2, the volatilization rate was determined by the measurement of a weight loss (% by weight). The results are shown in Table 5 and Table 6. Plots of data in Table 5 and Table 6 give graphs in Fig. 1 and Fig. 2.

**Table 5**

| Opening proportion and volatilization rate | | | | | | |
|---|---|---|---|---|---|---|
| Gelled drug: content of allyl isothiocyanate is 40% | | | | | | |

| Period while being left to stand (days) | Opening proportion of 100% | Opening proportion of 50% | Opening proportion of 20% | Opening proportion of 5% | Opening proportion of 1% | Opening proportion of 0.1% |
|---|---|---|---|---|---|---|
| 0 | 0.0 | 0.0 | 0.0 | 0.0 | 0.0 | 0.0 |
| 7 | 18.2 | 15.5 | 10.1 | 4.1 | 2.3 | 1.3 |
| 14 | 27.6 | 23.4 | 16.2 | 7.7 | 4.4 | 2.6 |
| 21 | 35.6 | 30.2 | 21.3 | 11.2 | 6.7 | 3.9 |
| 28 | 41.6 | 35.3 | 26.4 | 14.8 | 9.0 | 5.3 |
| 35 | 47.5 | 40.4 | 30.3 | 18.6 | 10.7 | 6.8 |
| 42 | 53.3 | 45.3 | 34.0 | 21.5 | 12.8 | 8.3 |
| 56 | 62.3 | 53.0 | 40.8 | 26.8 | 16.7 | 10.9 |
| 84 | 72.3 | 63.6 | 49.6 | 35.9 | 23.9 | 16.8 |
| 112 | 80.7 | 71.0 | 57.3 | 43.8 | 31.8 | 23.8 |
| 140 | 84.5 | 75.8 | 63.6 | 50.7 | 38.8 | 29.9 |
| 168 | 86.8 | 79.4 | 68.4 | 56.7 | 45.6 | 36.2 |
| 200 | 89.0 | 82.2 | 73.5 | 63.6 | 52.7 | 42.6 |
| 250 | 91.2 | 87.1 | 80.7 | 73.3 | 62.5 | 52.7 |
| 300 | 93.6 | 90.9 | 86.1 | 80.3 | 70.8 | 61.5 |
| 350 | 95.7 | 93.2 | 90.7 | 85.7 | 77.8 | 69.6 |
| 400 | 96.9 | 95.1 | 93.2 | 91.1 | 84.9 | 77.7 |

**Table 6**

| Kinds and thickness and of thermoplastic resin film as well as volatilization rate | | | | | | | |
|---|---|---|---|---|---|---|---|
| Gelled drug: content of allyl isothiocyanate is 40% | | | | | | | |

| Period while being left to stand (days) | PE40 µm | PE100 µm | PP40 µm | PP100 µm | PET15 µm | Nylon15 µm | No packaging |
|---|---|---|---|---|---|---|---|
| 0 | 0.0 | 0.0 | 0.0 | 0.0 | 0.0 | 0.0 | 0.0 |
| 7 | 26.3 | 13.5 | 8.2 | 4.3 | 0.0 | 0.0 | 35.3 |
| 14 | 44.8 | 28.6 | 15.1 | 8.1 | 0.0 | 0.0 | 53.0 |
| 21 | 56.8 | 40.3 | 20.8 | 12.0 | 0.0 | 0.1 | 65.0 |
| 28 | 66.8 | 51.0 | 5.7 | 15.9 | 0.1 | 0.2 | 75.6 |
| 35 | 71.6 | 58.7 | 0.8 | 19.8 | 0.1 | 0.3 | 80.2 |
| 42 | 75.6 | 63.5 | 4.9 | 23.8 | 0.2 | 0.4 | 84.1 |
| 49 | 78.6 | 68.6 | 39.9 | 27.7 | 0.3 | 0.4 | 87.4 |
| 56 | 81.5 | 71.9 | 43.6 | 31.8 | 0.3 | 0.5 | 90.0 |
| 63 | 83.8 | 74.4 | 48.6 | 35.6 | 0.4 | 0.5 | 91.8 |
| 70 | 85.2 | 76.1 | 52.4 | 39.4 | 0.4 | 0.6 | 93.3 |
| 77 | 86.4 | 78.6 | 56.4 | 43.8 | 0.5 | 0.7 | 94.2 |
| 84 | 88.4 | 80.3 | 60.3 | 47.7 | 0.6 | 0.7 | 95.1 |
| 91 | 89.3 | 82.0 | 4.4 | 51.9 | 0.6 | 0.8 | 95.8 |
| 98 | 99.1 | 83.1 | 68.5 | 56.1 | 0.7 | 0.8 | 96.2 |
| 105 | 90.9 | 84.3 | 71.6 | 59.7 | 0.8 | 0.9 | 97.0 |
| 112 | 91.8 | 85.5 | 74.8 | 63.6 | 0.8 | 1.0 | 97.2 |
| 119 | 92.3 | 86.8 | 79.2 | 68.4 | 0.9 | 1.1 | 97.8 |
| 126 | 92.7 | 88.0 | 81.8 | 71.9 | 1.0 | 1.1 | 98.3 |
| 133 | 93.2 | 89.1 | 84.8 | 76.3 | 1.0 | 1.2 | 98.6 |
| 140 | 93.8 | 90.0 | 86.8 | 78.9 | 1.1 | 1.3 | 99.0 |

As is apparent from Table 5 and Fig. 1, an initial volatilization rate (gradient of the graph in Fig. 1) in the gel-like resin molded object of Comparative Example 1 is very large and the volatilization rate decreases after a lapse of 30 to 40 days, thereby shortening a substantial volatilization duration period of time, whereas, the volatilization rate becomes uniform and the volatilization duration period of time is shortened as the opening proportion decreases in the gel-like resin molded bodies in the container of Examples 1 to 5.

As is apparent from the results of Table 6 and Fig. 2, an initial volatilization rate (gradient of the graph in Fig. 2) in the gel-like resin molded object of Comparative Example 2 is very large and the volatilization rate decreases after a lapse of 30 to 40 days, thereby shortening a substantial volatilization duration period of time, whereas, the volatilization rate is properly controlled in Examples 6 to 9. It is also apparent that, in Examples 10 and 11, the volatilization rate is small, thereby making it impossible to substantially secure the concentration of the gas of allyl isothiocyanate. Accordingly, it becomes necessary to use a film having a thickness smaller than 15 µm in case of PET and nylon depending on the purposes.

### (Permeability test of allyl isothiocyanate)

To examine an influence of the kinds and thickness of the thermoplastic film on the permeability of allyl isothiocyanate, 5 g of allyl isothiocyanate was charged in a thermoplastic resin bag of 6 cm × 6 cm in size and a weight loss was measured on a wire fabric to obtain a weight of allyl isothiocyanate permeated per 1 cm² · day. The results are shown in Table 7. As is apparent from Table 7, the permeability of allyl isothiocyanate largely depends on the kinds of the thermoplastic resin film. It is also apparent that the volatilization rate becomes smaller as the thickness of the film becomes larger. It is made possible to select the kinds and thickness of the thermoplastic resin film based on the results of Table 7 according to the purposes.

**Table 7**

| Permeability test results of thermoplastic resin film | | |
|---|---|---|
| Material of film | Thickness (µm) | Permeability (mg/cm² · day) |
| Nylon | 15 | 0.050 |
| | 30 | 0.004 |
| polyethylene terephthalate | 15 | 0.012 |
| | 30 | 0.008 |
| polyethylene | 40 | 3.7 |
| | 100 | 1.5 |
| polypropylene | 40 | 0.35 |
| | 100 | 0.1 |
| acrylonitrile-butadiene-methyl acrylate copolymer vinyl chloride | 30 | 0.01 |
| | 30 | 0.02 |

## Claims

1. An article comprising a volatilization control container which encloses a molded body comprising a resin base incorporating therein allyl isothiocyanate, characterized in that the container permits the rate of volatilization of the allyl isothiocyanate to be controlled and/or adjusted.

2. An article according to claim 1, wherein the container incorporates one or more openings which permit from 0.01 to 50% of the surface area of the molded body to be exposed to the ambient air.

3. An article according to claim 1, wherein the container is a thermoplastic film through which 0.05 to 10 mg/cm² · day of the allyl isothiocyanate can permeate into the ambient air.

4. An article according to claim 3, wherein the thermoplastic film is selected from polyethylene, polypropylene, ethylene-vinyl acetate, polyethylene terephthalate, polyvinyl chloride, nylon (polyamide) and polyacetal films, laminates thereof and laminates thereof with a nonwoven fabric.

5. An article according to any one of claims 1 to 4, wherein the molded body contains more than 20% and not more than 85% by weight of ally! isothiocyanate, based on the total weight of the molded body.

6. An article according to any one of claims 1 to 5, wherein the molded body has a rubber hardness of 0.1 to 100.

7. An article according to any one of claims 1 or 6, wherein the molded body is in bulk form or in the form of a sheet, film, particle, powder or coating.

8. An article according to any one of claims 1 or 7, wherein the base resin is a polyurethane resin.
